# FASCICULE DE BREVET EUROPEEN

(11) **EP 3 517 731 B1**
(45) Date de publication et mention de la délivrance du brevet: **10.03.2021**
(21) Numéro de dépôt: 19153869.3
(22) Date de dépôt: 28.01.2019
(51) Int. Cl.: F04D 29/32, F01D 5/08, F01D 5/14, F04D 29/68

(54) **ENSEMBLE COMPRENANT UN PASSAGE ANNULAIRE ENTRE UNE VIROLE STATIQUE ET UNE PLATEFORME ROTORIQUE DE TURBOMACHINE ET PROCÉDÉ CORRESPONDANT DE CONTRÔLE DE STABILITÉ D'UN COMPRESSEUR**
ANORDNUNG MIT EINER RINGFÖRMIGEN DURCHLASSÖFFNUNG ZWISCHEN EINER STATOR- UND EINER ROTORPLATTFORM EINER STRÖMUNGSMASCHINE UND ZUGEHÖRIGES VERFAHREN ZUR REGELUNG DER VERDICHTERSTABILITÄT
ARRANGEMENT COMPRISING AN ANNULAR PASSAGE BETWEEN A STATOR AND A ROTOR PLATFORM OF A TURBOMACHINE AND CORRESPONDING METHOD OF COMPRESSOR STABILITY CONTROL

(30) Priorité: 30.01.2018 BE 201805051
(43) Date de publication de la demande: 31.07.2019
(73) Titulaire: Safran Aero Boosters SA, 4041 Herstal (BE)
(72) Inventeur: PRINCIVALLE, Rémy, 4684 Haccourt (BE); PENALVER CASTRO, Enrique, 4877 Olne (BE); JANSSENS, Matthieu, 4280 Merdorp (BE)
(74) Mandataire: Lecomte & Partners

(56) Documents cités:
- WO-A1-01/81731
- US-A- 4 507 052
- US-A1- 2008 310 961

## Description

### Domaine technique

L'invention traite de l'espace circulaire entre une plateforme rotorique et une virole statorique de turbomachine. Plus précisément, l'invention concerne le guidage d'un flux dans un passage entre une plateforme rotorique et une virole statorique. L'invention a également trait à une turbomachine axiale, notamment un turboréacteur d'avion ou un turbopropulseur d'aéronef. L'invention propose également un procédé de contrôle de stabilité d'un compresseur de turbomachine.

### Technique antérieure

En fonctionnement, l'air renfermé dans un rotor de compresseur de turbomachine tend à s'échauffer en raison de ses propriétés viscoélastiques.

Une approche pour contrer cet effet nuisible est d'assurer un écoulement d'air frais traversant le rotor et s'échappant en amont du rotor. Cet air de refroidissement est ensuite réinjecté radialement dans la veine primaire, mais il y crée des perturbations lorsqu'il se heurte au flux primaire.

En outre, l'air de refroidissement peut rejoindre un flux parasite contournant un dispositif d'étanchéité sous une virole interne. La réunion de ce flux parasite et du flux de refroidissement amplifie les perturbations dans la veine primaire, tout comme les fuites se déplaçant circonférentiellement entre le rotor et la virole interne. L'importance des perturbations peut générer des phénomènes de décrochages dans le compresseur.

Le document US2016/0298477A1 divulgue une turbomachine comprenant une rangée d'aubes statoriques entre deux rangées d'aubes rotoriques. La virole interne du stator est séparée des plateformes rotoriques par deux jeux circulaires où des fuites sont réintroduites de manière tangente à l'écoulement primaire. Cette faible inclinaison entre la réinjection et l'écoulement principal préserve ce dernier. Toutefois, la géométrie générale reste perfectible Les documents WO 01/81731 A1 et US 4507052 A divulguent d'autres exemples de turbomachines.

### Résumé de l'invention

### Problème technique

L'invention a pour objectif de résoudre au moins un des problèmes posés par l'art antérieur. L'invention a également pour objectif de réduire les phénomènes de décrochement, notamment en coins d'aubes. L'invention a également pour objectif de proposer une solution simple, résistante, légère, économique, fiable, facile à produire, commode d'entretien, d'inspection aisée, et améliorant le rendement.

### Solution technique

L'invention a pour objet un ensemble pour turbomachine, notamment pour compresseur de turbomachine, l'ensemble comprenant : une rangée annulaire d'aubes amont avec des bords de fuite s'étendant radialement depuis un support amont ; une rangée annulaire d'aubes aval avec des bords d'attaque axialement en regard des bords de fuite et s'étendant radialement depuis un support aval ; un passage annulaire délimité par le support amont et le support aval ; le support aval comprenant une surface externe avec un profil de révolution comprenant un segment amont délimitant le passage annulaire et un segment aval ; remarquable en ce que le profil de révolution comprend en outre un arc de jonction reliant le segment amont au segment aval, au moins un bord d'attaque étant disposé en amont de l'arc de jonction et en ce que l'une des rangées d'aubes est rotorique selon un axe de rotation, le profil du passage annulaire présente un axe médian formant un angle α avec l'axe de rotation, l'angle α étant compris entre 15° et 45°.

Selon des modes avantageux de l'invention, l'ensemble peut comprendre une ou plusieurs des caractéristiques suivantes, prises isolément ou selon toutes les combinaisons techniques possibles :
- Au moins une extrémité radialement interne de bord d'attaque est disposée en amont de l'arc de jonction.
- Chaque aube aval présente une corde et un retrait axial G entre l'arc de jonction et son bord de d'attaque, ledit retrait axial G étant inférieur ou égal à 10% de la corde, préférentiellement inférieur ou égal à 25% de la corde.
- Le support amont présente une surface externe tangente au, et alignée avec le segment aval.
- Les bords d'attaque s'étendent radialement depuis le segment amont.
- Le support amont présente une surface interne en forme de cône délimitant le passage annulaire.
- Le compresseur est notamment un compresseur à haute vitesse, par exemple disposé en entrée de turbomachine.
- L'une des rangées d'aubes est rotorique selon un axe de rotation, le profil du passage annulaire présente un axe médian formant un angle α avec l'axe de rotation, l'angle α étant compris entre : 5° et 25°, ou entre 10° et 20°; le compresseur présentant éventuellement une veine plongeante et/ou convergente dans laquelle sont disposées les aubes rotoriques.
- Le segment amont et/ou le segment aval sont droits, et/ou l'arc de jonction présente un rayon de courbure constant.
- Le au moins un ou chaque bord d'attaque chevauche axialement l'arc de jonction.
- Le segment aval s'étend axialement sur la majorité du support aval.
- Le support amont et le support aval comprennent un dispositif d'étanchéité abradable axialement au niveau du passage annulaire.
- Le segment amont et le segment aval sont inclinés l'un par rapport à l'autre d'au plus : 30° ou 20° ou 10°.
- À l'intérieur du passage annulaire, la hauteur C est constante.
- Le support aval présente un bec annulaire délimitant le passage annulaire.
- Le support amont présente une gorge annulaire ouverte axialement vers l'aval, le segment amont étant au moins partiellement logé dans ladite gorge annulaire.
- La longueur E du passage est supérieure ou égale à la hauteur C du passage.
- Le rayon de l'arc de jonction est supérieur à la longueur E du passage et/ou à la hauteur C du passage, éventuellement au moins deux fois supérieur.
- La longueur E du passage est supérieure à l'épaisseur de l'une des aubes aval au niveau du support aval.
- Le support aval présente une gorge annulaire ouverte axialement vers l'amont et dans laquelle le support amont est engagé axialement.
- La longueur E et la hauteur C du passage peuvent être mesurées, en un point donné du passage, selon l'écoulement et perpendiculairement à l'écoulement respectivement.
- Le support amont et le support aval se chevauchent axialement.
- Le premier segment et le deuxième segment sont inclinés l'un par rapport à l'autre, par exemple d'au moins 2°, ou 3° ou 5° ou 10°.
- Les supports sont disposés aux extrémités internes des aubes.
- L'arc de jonction est disposé en aval des bords d'attaques.
- L'ensemble comprend un écart axial B entre l'extrémité aval du support amont et le bord d'attaque, l'écart axial B étant supérieur ou égal à la longueur axiale du passage.
- Les aubes amont sont des aubes statoriques, le support amont est une virole interne, les aubes aval sont des aubes rotoriques, le support aval est une plateforme annulaire rotorique.
- Le rotor du compresseur est configuré pour tourner à au moins : 10000 tours par minute, ou 15000 tours par minute, ou 18000 tours par minute

Dans un exemple non revendiqué, l'ensemble de turbomachine comprend: une première rangée annulaire d'aubes reliées par un premier support, une deuxième rangée annulaire d'aubes reliées par un deuxième support, un passage annulaire orienté vers l'aval et formé radialement entre le premier support et le deuxième support, remarquable en ce que le deuxième support comprend une surface annulaire avec une surface conique délimitant le passage annulaire, et une portion de surface torique en contact de la surface conique et disposée en aval, et préférentiellement à distance, des bords d'attaque des deuxièmes aubes.

L'invention a également pour objet une turbomachine, notamment un turboréacteur d'aéronef, la turbomachine comprenant un ensemble, remarquable en ce que l'ensemble est conforme à l'invention, préférentiellement le rotor est un tambour supportant en outre une troisième rangée annulaire d'aubes disposées en amont des aubes amont.

Selon un mode avantageux de l'invention, la turbomachine comprend un orifice de prélèvement d'air communiquant avec son environnement externe, ledit orifice étant disposé en amont du passage annulaire et/ou communiquant avec ledit passage annulaire afin de refroidir le tambour et/ou l'ensemble.

L'invention a également pour objet un procédé de contrôle de stabilité d'un compresseur de turbomachine, le compresseur incluant un ensemble avec une rangée annulaire d'aubes amont avec des bords de fuite s'étendant radialement depuis un support amont ; une rangée annulaire d'aubes aval avec des bords d'attaque axialement en regard des bords de fuite et s'étendant radialement depuis un support aval ; un passage annulaire délimité par le support amont et le support aval ; le support aval comprenant une surface externe avec un profil de révolution comprenant un segment amont délimitant le passage annulaire et un segment aval; remarquable en ce que le profil de révolution comprend en outre un arc de jonction reliant le segment amont au segment aval, et en ce que le procédé comprend une étape fonctionnement du compresseur pendant laquelle un écoulement auxiliaire traverse le passage annulaire en étant incliné par rapport au segment aval d'un angle d'injection inférieur ou égal à : 15°, ou 10° ou 5° ; l'ensemble étant conforme à l'invention.

Selon un mode avantageux de l'invention, lors de l'étape fonctionnement du compresseur, l'écoulement auxiliaire rejoint une couche limite en contact de la surface externe, et notamment du segment amont ; de profil l'écoulement auxiliaire et la couche limite étant inclinés l'un par rapport à l'autre d'au plus : 30°, ou 25°, ou 20°, ou 15°, ou 10°, ou 5°.

Selon un mode avantageux de l'invention, lors de l'étape fonctionnement du compresseur, l'écoulement auxiliaire rejoint un flux annulaire traversant axialement le compresseur; de profil l'écoulement auxiliaire (49) et le flux annulaire étant inclinés l'un par rapport à l'autre d'au plus : 20°, ou 15°, ou 10°, ou 5°.

Selon un mode avantageux de l'invention, le compresseur comprend un rotor support la rangée annulaire d'aubes amont ou la rangée annulaire d'aubes aval, lors de l'étape fonctionnement du compresseur le rotor tourne à une vitesse d'au moins : 10000 tr/min, ou 15000 tr/min, ou 18000 tr/min, ou 20000 tr/min.

Selon un mode avantageux de l'invention, lors de l'étape fonctionnement du compresseur, l'écoulement auxiliaire refroidit le support aval.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement mentionné.

### Avantages apportés

L'invention propose une géométrie spécifique de canal annulaire qui limite l'impact de la réinjection d'un flux entre deux bandes annulaires successives. La position des bords d'attaque en amont de la cassure de la virole ou de la plateforme facilite l'écoulement et permet une modification plus progressive de la veine. La présente géométrie peut être prévue en amont et en aval de chaque virole et de chaque plateforme.

Grâce à l'invention, par exemple via l'angle β, via le rayon de courbure R de l'arc de jonction, et via l'écart axial G, le décollement du fluide réinjecté est évité au niveau des aubes, le flux primaire « colle » davantage aux parois annulaires qui le délimitent. Par-là, le fonctionnement de la turbomachine est préservé. Le rendement et la stabilité sont optimisés.

### Brève description des dessins

La figure 1 représente une turbomachine axiale selon l'invention.
La figure 2 est un schéma d'un compresseur de turbomachine selon l'invention.
La figure 3 illustre un étage de compression selon l'invention.
La figure 4 est une vue de profil du passage annulaire selon l'invention.

### Description des modes de réalisation

Dans la description qui va suivre, les termes « interne » et « externe » renvoient à un positionnement par rapport à l'axe de rotation d'une turbomachine axiale.

La direction axiale correspond à la direction le long de l'axe de rotation de la turbomachine. La direction radiale est perpendiculaire à l'axe de rotation.

L'amont et l'aval sont en référence au sens d'écoulement principal du flux dans la turbomachine.

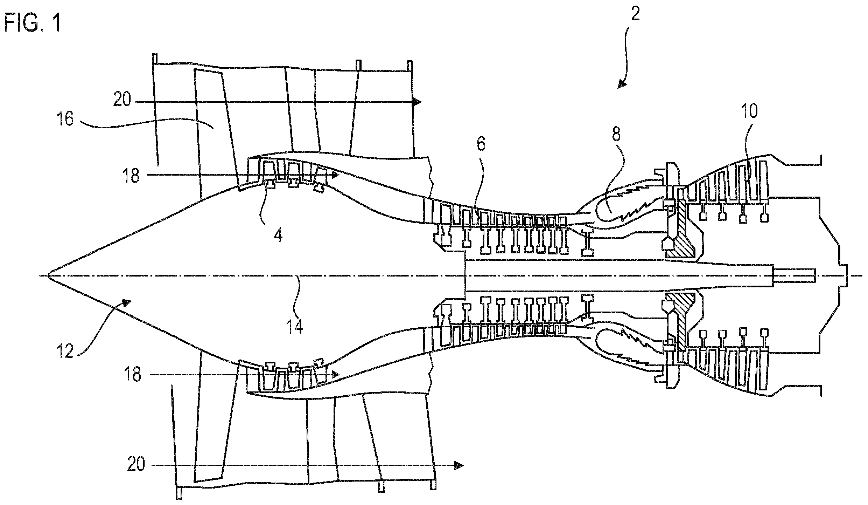

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux susmentionnés de la turbomachine, et en un flux secondaire 20 traversant un conduit annulaire (partiellement représenté) le long de la machine pour ensuite rejoindre le flux primaire en sortie de turbine.

Le flux secondaire peut être accéléré de sorte à générer une réaction de poussée nécessaire au vol d'un avion. Les flux primaire 18 et secondaire 20 sont des flux annulaires coaxiaux et emmanchés l'un dans l'autre.

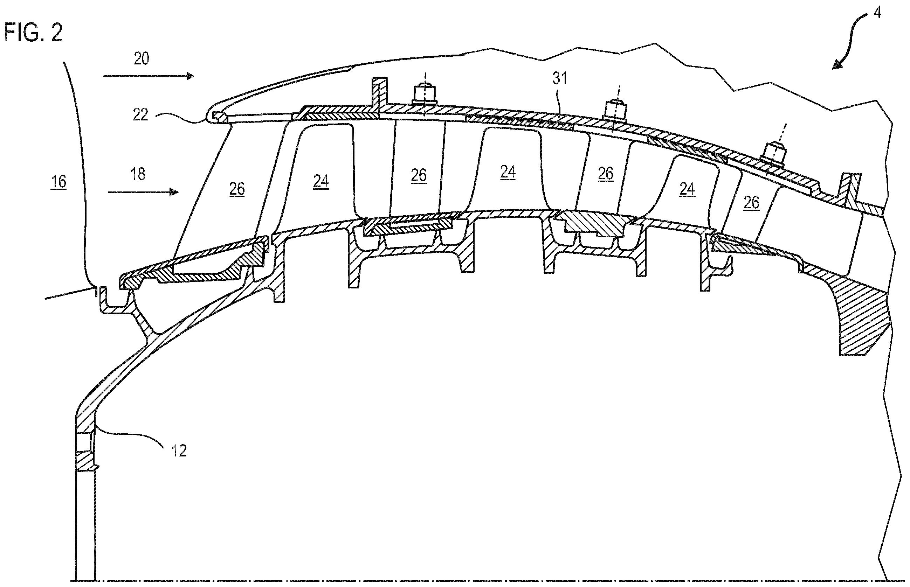

La figure 2 est une vue en coupe d'un compresseur d'une turbomachine axiale telle que celle de la figure 1. L'écoulement peut y être transsonique. Le compresseur peut être un compresseur basse-pression 4. On peut y observer une partie de la soufflante 16 et le bec de séparation 22 du flux primaire 18 et du flux secondaire 20. Le rotor 12 comprend plusieurs rangées d'aubes rotoriques 24, en l'occurrence trois. Il peut être un tambour monobloc aubagé, ou comprendre des aubes à fixation par queue d'aronde.

Le compresseur basse-pression 4 comprend plusieurs redresseurs, en l'occurrence quatre, qui contiennent chacun une rangée d'aubes statoriques 26.

Certaines aubes statoriques peuvent être à orientation réglable, également appelé aubes à calage variable. Les redresseurs sont associés au fan 16 ou à une rangée d'aubes rotoriques pour redresser le flux d'air, de sorte à convertir la vitesse du flux en pression, notamment en pression statique.

Les aubes statoriques 26 s'étendent essentiellement radialement depuis un carter extérieur 31, et peuvent y être fixées et immobilisées à l'aide d'axes.

Optionnellement, l'espacement entre les aubes peut varier localement tout comme leurs orientations angulaires. Certaines aubes (24 ; 26) peuvent différer du reste des aubes de leur rangée. Le carter 31 peut être formé de plusieurs anneaux, ou de demi-coquilles.

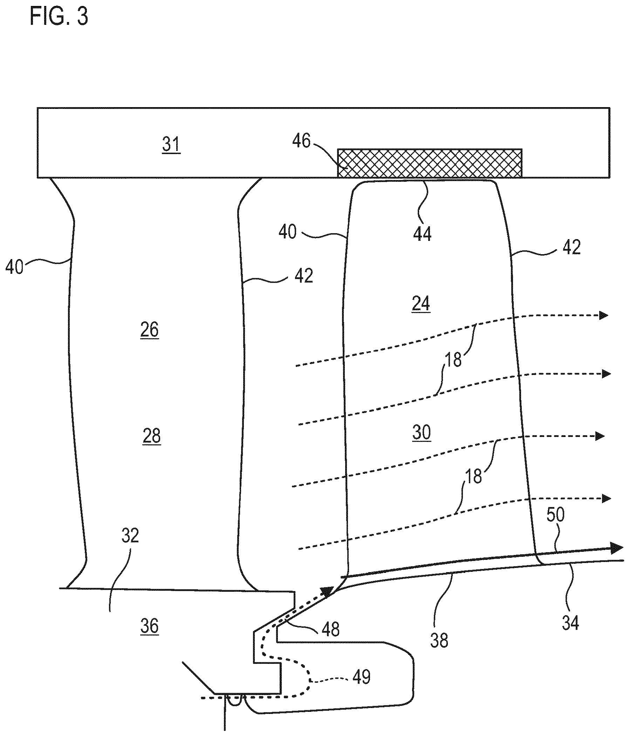

La figure 3 esquisse une paire d'aubes du compresseur, par exemple du compresseur tel que présenté en relation avec la figure 2. Chaque aube peut être représentative de sa rangée annulaire d'aubes identiques.

Les aubes peuvent correspondre à une première aube et à une deuxième aube, ou encore à une aube amont 28 et à une aube aval 30. Ces aubes peuvent correspondre respectivement à une aube statorique 26 et à une aube rotorique 24 telles que celles évoquées en figures précédentes. Les aubes s'étendent radialement et traversent le flux primaire 18. Elles s'étendent depuis le carter externe 31 du compresseur, et gagnent une virole interne 32 ou une plateforme annulaire 34 qui forment respectivement un support amont 36 et un support aval 38, ou plus généralement un premier support et un deuxième support. Ces supports (36 ; 38) sont annulaires. Chacun d'eux peut être monobloc.

Éventuellement, la virole est segmentée.

Les aubes (24-28) présentent chacune un bord d'attaque 40 et un bord de fuite 42 qui s'étendent sur toute la hauteur radiale de l'aube correspondante.

Concernant l'aube amont 28, le bord d'attaque 40 et le bord de fuite 42 relient le support amont 36 au carter externe 31. Pour l'aube aval 30, le bord d'attaque 40 et le bord de fuite 42 s'étendent radialement depuis le support aval 38 jusqu'à la tête 44 de l'aube aval 30. La tête 44 peut être une extrémité radiale libre de l'aube aval 30. En fonctionnement cette tête 44 peut effleurer une couche de matériau abradable 46 disposée contre le carter externe 31 afin d'assurer une étanchéité ; notamment une étanchéité dynamique.

Le support amont 36 et le support aval 38 délimitent entre eux un passage annulaire 48. Le passage annulaire 48 est axialement et radialement entre les supports (36; 38). Il est traversé par un flux auxiliaire 49, par exemple formé d'un flux de refroidissement et d'un écoulement de fuite sous le support amont 36. Le passage annulaire 48 présente un sens d'écoulement vers l'aval, et un axe d'écoulement sensiblement incliné par rapport au flux primaire 18.

Le passage annulaire 48 peut être sensiblement tangent ou parallèle à la couche limite 50 circulant contre le support amont 36 puis contre le support aval 38. La couche limite 50 peut être coupée par l'aube aval 30. Le passage annulaire 48 est principalement orienté axialement vers l'aval. Il forme une bouche circulaire tournée vers le bord d'attaque 40 de l'aube aval 30.

De profil, l'orientation du flux auxiliaire 49 donnée par le passage 48 permet au flux primaire 18 de conserver des lignes d'écoulement parallèles les unes aux autres, et parallèles au support aval 38. L'invention préserve cet avantage malgré la présence des obstacles que forment les aubes aval 30.

Le compresseur peut être configuré de manière à ce que son rotor fonctionne, et donc tourne à au moins 18000 tours par minute. Cela signifie que son rotor, et en particulier les aubes rotoriques 24 résistent à la force centrifuge correspondante. En outre, un équilibre dynamique poussé doit être effectué afin de réduire les vibrations lors de la rotation du rotor. Le compresseur peut être un compresseur haute-vitesse, également appelé booster rapide.

Le rotor du compresseur, par exemple dans le cas d'un compresseur haute-vitesse, peut être formé de disques, notamment de disque aubagés monobloc ; c'est-à-dire de disques où chaque rangée d'aube forme un ensemble monobloc avec le disque support associé.

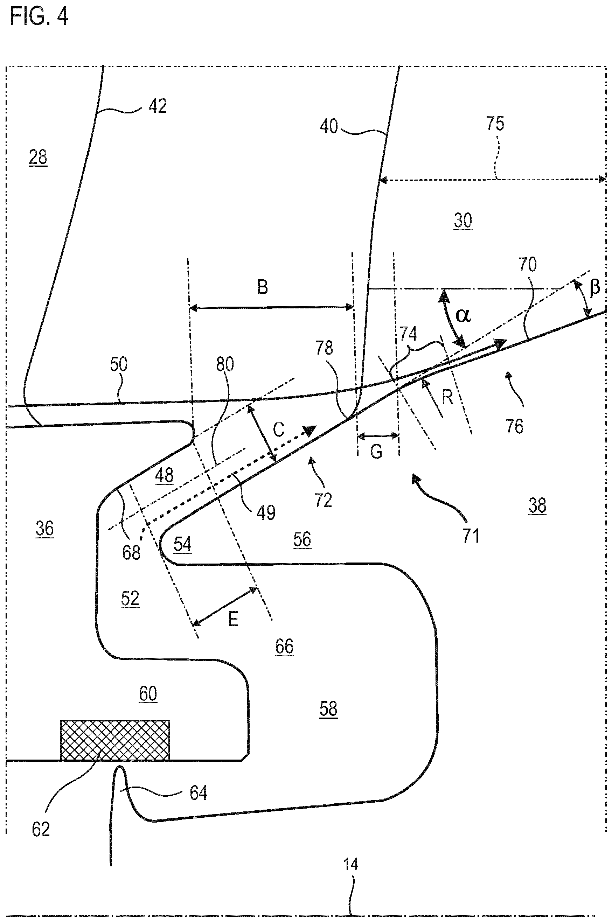

La figure 4 est un agrandissement du passage annulaire 48 formé entre le support amont 36 et le support aval 38. Le bord de fuite 42 de l'aube amont 28 et le bord d'attaque 40 de l'aube aval 30 sont représentés de part et d'autre, et axialement à distance du passage annulaire 48. Seulement deux aubes sont représentées, toutefois le présent enseignement est applicable à leurs rangées respectives.

Le support amont 36 peut présenter une gorge aval 52 de forme annulaire autour de l'axe de rotation 14. Cette gorge aval 52 peut être ouverte axialement vers l'aval, et recevoir une extrémité amont 54 du support aval, par exemple en forme de bec annulaire 56. En s'étendant axialement dans la gorge aval 52, l'extrémité amont 54 forme une première chicane. La gorge aval 52 peut inclure le passage annulaire 48. Ce dernier peut être autour de l'extrémité amont 54 du support aval 38.

Le support aval 38 peut montrer une gorge amont 58 de forme annulaire autour de l'axe de rotation 14. Cette gorge amont 58 peut recevoir une portée interne 60, par exemple tubulaire, du support amont 36 afin de former une deuxième chicane. La portée interne 60 peut recevoir une couche de matériau abradable 62 coopérant avec une nervure annulaire 64, également appelée léchette, matérialisée sur le support aval 38, par exemple en extrémité de la gorge amont 58. L'imbrication des supports (36 ; 38) via l'interpénétration de leur gorges (52 ; 58) crée une triple inversion d'écoulement axial dans le conduit annulaire 66 qu'ils délimitent entre eux. Cela ajoute des chicanes, et limite les fuites.

Le passage annulaire 48 est entouré et donc délimité par une surface annulaire interne 68 du support amont 36 de la gorge aval 52. Cette surface annulaire 68 peut être sensiblement conique.

Le support aval 38 comprend une surface externe 70. La surface externe 70 peut délimiter l'intérieur du passage 48 et du flux primaire 18. Elle guide la couche limite 50. La surface externe 70 présente un profil de révolution 71 autour de l'axe de rotation 14 du rotor. La rotation du profil 71 autour de l'axe 14 permet de générer la surface externe 70.

Le profil de révolution 71 comprend un segment amont 72, un arc de jonction 74 et un segment aval 76. Le segment aval 76 peut être axialement au niveau de l'aube aval 30. L'arc de jonction 74 touche les deux segments (72 ; 76), il les relie en formant leur interface. Le segment amont 72 peut être partiellement disposé dans la gorge aval 52. Il peut délimiter le passage 48. Il peut être en contact de la surface intrados et de la surface extrados de l'aube aval 30, et/ou peut recevoir l'extrémité radiale interne 78 du bord d'attaque 40. Puisque la position axiale du bord d'attaque 40 varie sur la hauteur de l'aube 30, l'arc 74 peut s'étendre axialement le long du bord d'attaque 40, qui le traverse éventuellement axialement.

L'arc de jonction 74 est disposé en aval du bord d'attaque 40. En particulier, l'arc de jonction 74 est en retrait vers l'aval de l'extrémité interne 78, également appelé coin d'aube. Un écart axial G, par exemple mesuré contre la surface externe 70, sépare le bord d'attaque 40 de l'arc de jonction 74. L'écart axial G peut être supérieur ou égal : à 5%, ou à 10% de la corde 75 de l'aube aval 30. La corde 75 peut être une corde moyenne. Elle peut relier le bord d'attaque 40 au bord de fuite (non représenté) de l'aube aval 30. Le segment amont 72 forme alors un toboggan à pente continue où commence le bord d'attaque 40, notamment en recevant l'extrémité interne 78.

Le segment amont 72 et le segment aval 76 sont inclinés l'un par rapport à l'autre d'un angle β, par exemple d'au moins 5° ou d'au moins 10°. Chacun d'eux peut être incliné par rapport à l'axe de rotation 14, le segment amont 72 étant le plus incliné. Le segment amont 72 est incliné d'un angle α compris entre 15° et 45°, éventuellement compris entre 20° et 30° inclus, par rapport à l'axe de rotation 14.

L'arc de jonction 74 peut présenter un rayon R constant. Il peut ainsi générer une portion de surface de tore qui relie une surface conique amont et une surface conique aval qui sont respectivement générées par le segment amont 72 et le segment aval 76.

Le passage 48 présente une longueur E selon l'écoulement du flux auxiliaire 49 le traversant, et une hauteur C perpendiculairement au même flux auxiliaire 49.

Le flux auxiliaire 49 peut être selon l'axe médian 80 du profil du passage 48.

L'axe médian 80 peut être parallèle au segment amont 72, et par rapport à la surface interne 68. Il peut être incliné de l'angle α par rapport à l'axe de rotation 14.

La longueur E peut être supérieure à 90% de la hauteur C. Le rapport E/C peut être supérieur ou égal à 1. La longueur E peut être supérieure à l'épaisseur de l'aube aval 30. L'épaisseur de l'aube aval peut être mesurée contre le support aval 38, éventuellement en dehors du rayon de raccordement de l'aube 30 au support 38.

Le rayon R de l'arc de jonction 74 peut être supérieur à la hauteur C comme à la longueur E, par exemple au moins deux fois supérieur. Le rayon peut être compris entre 10 mm et 100 mm. Cela améliore la douceur de raccordement, et limite les perturbations dans la couche limite 50. Les tourbillons sont limités, tout comme les décollements au niveau du bord d'attaque 40.

Le segment amont 72 forme un lien engagé dans le passage 48 et sous l'aube aval 30. Toutefois, le bord d'attaque 40 est reculé par rapport au passage 48. il en est séparé par un écart axial B supérieur à la longueur E et/ou à la hauteur C.

## Revendications

1. Ensemble pour turbomachine (2), notamment pour compresseur (4 ; 6) de turbomachine (2), l'ensemble comprenant :
- une rangée annulaire d'aubes amont (28) avec des bords de fuite (42) s'étendant radialement depuis un support amont (36) ;
- une rangée annulaire d'aubes aval (30) avec des bords d'attaque (40) axialement en regard des bords de fuite (42) et s'étendant radialement depuis un support aval (38) ;
- un passage annulaire (48) délimité par le support amont (36) et le support aval (38);
le support aval (38) comprenant une surface externe (70) avec un profil de révolution (71) comprenant un segment amont (72) délimitant le passage annulaire (48) et un segment aval (76) ;
le profil de révolution (71) comprenant en outre un arc de jonction (74) reliant le segment amont (72) au segment aval (76), au moins un bord d'attaque (40) étant disposé en amont de l'arc de jonction (74) ;
l'une des rangées d'aubes étant rotorique selon un axe de rotation (14), **caractérisé en ce que** et- le profil du passage annulaire (48) présente un axe médian (80) formant un angle (a) avec l'axe de rotation (14) compris entre 15° et 45°.

2. Ensemble selon la revendication 1, **caractérisé en ce qu'**au moins une extrémité radialement interne (78) de bord d'attaque (40) est disposée en amont de l'arc de jonction (74).

3. Ensemble selon l'une des revendications 1 à 2, **caractérisé en ce que** chaque aube aval (30) présente une corde (75) et un retrait axial G entre l'arc de jonction (74) et son bord de d'attaque (40), ledit retrait axial G étant inférieur ou égal à 10% de la corde (75), préférentiellement inférieur ou égal à 25% de la corde.

4. Ensemble selon l'une des revendications 1 à 3, **caractérisé en ce que** le support amont (36) présente une surface externe tangente au segment aval (76).

5. Ensemble selon l'une des revendications 1 à 4, **caractérisé en ce que** le support amont (36) présente une surface interne (68) en forme de cône délimitant le passage annulaire (48).

6. Ensemble selon l'une des revendications 1 à 5, **caractérisé en ce que** le support amont (36) et le support aval (38) comprennent un dispositif d'étanchéité abradable axialement au niveau du passage annulaire (48).

7. Ensemble selon l'une des revendications 1 à 6, **caractérisé en ce que** le support amont (36) présente une gorge annulaire (52) ouverte axialement vers l'aval, le segment amont (72) étant au moins partiellement logé dans ladite gorge annulaire (52).

8. Ensemble selon l'une des revendications 1 à 7, **caractérisé en ce que** la longueur E du passage (48) est supérieure ou égale à la hauteur C du passage (48).

9. Turbomachine (2), notamment un turboréacteur d'aéronef, la turbomachine (2) comprenant un ensemble, **caractérisée en ce que** l'ensemble est conforme à l'une des revendications 1 à 8, préférentiellement l'ensemble comprend un tambour ou un disque supportant en outre une troisième rangée annulaire d'aubes disposées en amont des aubes amont (28).

10. Turbomachine (2) selon la revendication 9, **caractérisée en ce qu'**elle comprend un orifice de prélèvement d'air communiquant avec son environnement externe, ledit orifice étant disposé en amont du passage annulaire (48) et/ou communiquant avec ledit passage annulaire (48) afin de refroidir le tambour ou le disque.

11. Procédé de contrôle de stabilité d'un compresseur (4 ; 6) de turbomachine, le compresseur incluant un ensemble avec une rangée annulaire d'aubes amont (28) avec des bords de fuite (42) s'étendant radialement depuis un support amont (36) ; une rangée annulaire d'aubes aval (30) avec des bords d'attaque (40) axialement en regard des bords de fuite (42) et s'étendant radialement depuis un support aval (38) ; un passage annulaire (48) délimité par le support amont (36) et le support aval (38); le support aval (38) comprenant une surface externe (70) avec un profil de révolution (71) comprenant un segment amont (72) délimitant le passage annulaire (48) et un segment aval (76) ;
**caractérisé en ce que**
le profil de révolution (71) comprend en outre un arc de jonction (74) reliant le segment amont (72) au segment aval (76), et **en ce que** le procédé comprend une étape fonctionnement du compresseur pendant laquelle un écoulement auxiliaire (49) traverse le passage annulaire (48) en étant incliné par rapport au segment aval (76) d'un angle d'injection inférieur ou égal à : 10° ou 5°; l'ensemble étant conforme à l'une des revendications 1 à 8.

12. Procédé selon la revendication 11, **caractérisé en ce que** lors de l'étape fonctionnement du compresseur, l'écoulement auxiliaire (49) rejoint une couche limite (49) en contact de la surface externe (70) ; l'écoulement auxiliaire (49) et la couche limite (49) étant inclinés l'un par rapport à l'autre d'au plus : 30° ou 15°.

13. Procédé selon l'une des revendications 11 à 12, **caractérisé en ce que** lors de l'étape fonctionnement du compresseur, l'écoulement auxiliaire (49) rejoint un flux annulaire (18) traversant axialement le compresseur ; l'écoulement auxiliaire (49) et le flux annulaire (18) étant inclinés l'un par rapport à l'autre d'au plus : 20° ou 10°.

14. Procédé selon l'une des revendications 11 à 13, **caractérisé en ce que** le compresseur comprend un rotor (12) supportant la rangée annulaire d'aubes amont (28) ou la rangée annulaire d'aubes aval (30), lors de l'étape fonctionnement du compresseur le rotor (12) tourne à une vitesse d'au moins : 15000 tr/min, ou 18000 tr/min.

15. Procédé selon l'une des revendications 11 à 14, **caractérisé en ce que** lors de l'étape fonctionnement du compresseur, l'écoulement auxiliaire (49) refroidit le support aval (38).

## Patentansprüche

1. Baugruppe für eine Turbomaschine (2), insbesondere für einen Kompressor (4; 6) einer Turbomaschine (2), wobei die Baugruppe Folgendes umfasst:
- eine ringförmige Anordnung von stromaufwärtigen Schaufeln (28) mit Hinterkanten (42), die sich radial von einem stromaufwärtigen Träger (36) erstrecken;
- eine ringförmige Anordnung von stromabwärtigen Schaufeln (30) mit Vorderkanten (40), die den Hinterkanten (42) axial gegenüberliegen und sich radial von einer stromabwärtigen Halterung (38) erstrecken;
- einen ringförmigen Durchgang (48), der durch den stromaufwärtigen Träger (36) und den stromabwärtigen Träger (38) begrenzt wird;
wobei der stromabwärtige Träger (38) eine Außenfläche (70) mit einem Rotationsprofil (71) aufweist, das einen stromaufwärtigen Abschnitt (72), der den ringförmigen Durchgang (48) begrenzt, und einen stromabwärtigen Abschnitt (76) umfasst;
das Rotationsprofil (71) ferner einen Verbindungsbogen (74) aufweist, der das stromaufwärtige Segment (72) mit dem stromabwärtigen Segment (76) verbindet, wobei mindestens eine Vorderkante (40) stromaufwärts des Verbindungsbogens (74) angeordnet ist;
eine der Flügelanordnungen sich rotorartig um eine Drehachse (14) erstreckt **dadurch gekennzeichnet, dass**
das Profil des ringförmigen Durchgangs (48) eine Mittelachse (80) aufweist, die mit der Drehachse (14) einen Winkel (a) zwischen 15° und 45° bildet.

2. Baugruppe nach Anspruch 1, **dadurch gekennzeichnet, dass** mindestens ein radial inneres Ende (78) der Vorderkante (40) stromaufwärts des Gelenkbogens (74) angeordnet ist.

3. Baugruppe nach einem der Ansprüche 1 bis 2, **dadurch gekennzeichnet, dass** jede stromabwärtige Schaufel (30) eine Sehne (75) und eine axiale Kürzung G zwischen dem Verbindungsbogen (74) und ihrer Vorderkante (40) aufweist, wobei die axiale Kürzung G kleiner oder gleich 10 % der Sehne (75), vorzugsweise kleiner oder gleich 25 % der Sehne ist.

4. Baugruppe gemäß einem der Ansprüche 1 bis 3, **dadurch gekennzeichnet, dass** die stromaufwärtige Stütze (36) eine Außenfläche tangential zum stromabwärtigen Segment (76) aufweist.

5. Baugruppe nach einem der Ansprüche 1 bis 4, **dadurch gekennzeichnet, dass** der stromaufwärtige Träger (36) eine konische Innenfläche (68) aufweist, die den ringförmigen Durchgang (48) begrenzt.

6. Baugruppe nach einem der Ansprüche 1 bis 5, **dadurch gekennzeichnet, dass** der stromaufwärtige Träger (36) und der stromabwärtige Träger (38) am Ringkanal (48) eine axiale abriebfeste Dichtungsvorrichtung aufweisen.

7. Baugruppe nach einem der Ansprüche 1 bis 6, **dadurch gekennzeichnet, dass** der stromaufwärtige Träger (36) eine axiale stromabwärts offene Ringnut (52) aufweist, wobei das stromaufwärtige Segment (72) zumindest teilweise in der Ringnut (52) untergebracht ist.

8. Baugruppe nach einem der Ansprüche 1 bis 7, **dadurch gekennzeichnet, dass** die Länge E des Durchgangs (48) größer oder gleich der Höhe C des Durchgangs (48) ist.

9. Turbomaschine (2), insbesondere ein Flugzeug-Turbostrahltriebwerk, wobei die Turbomaschine (2) eine Baugruppe umfasst, die **dadurch gekennzeichnet ist, dass** die Baugruppe einem der Ansprüche 1 bis 8 entspricht, wobei die Baugruppe vorzugsweise eine Trommel oder eine Scheibe umfasst, die außerdem eine dritte ringförmige Anordnung von Schaufeln trägt, die stromaufwärts der stromaufwärtigen Schaufeln (28) angeordnet sind.

10. Turbomaschine (2) nach Anspruch 9, **dadurch gekennzeichnet, dass** sie eine Luftprobenentnahmeöffnung aufweist, die mit ihrer äußeren Umgebung in Verbindung steht, wobei die Öffnung stromaufwärts des ringförmigen Durchgangs (48) angeordnet ist und/oder mit dem ringförmigen Durchgang (48) in Verbindung steht, um die Trommel oder Scheibe zu kühlen.

11. Verfahren zum Steuern der Stabilität eines Kompressors (4; 6) einer Turbomaschine, wobei der Kompressor eine Baugruppe mit einer ringförmigen Reihe von stromaufwärtigen Schaufeln (28) mit Hinterkanten (42) aufweist, die sich radial von einer stromaufwärtigen Halterung (36) erstrecken; eine ringförmige Anordnung von stromabwärtigen Schaufeln (30) mit Vorderkanten (40), die den Hinterkanten (42) axial gegenüberliegen und sich radial von einer stromabwärtigen Halterung (38) erstrecken; einen ringförmigen Durchgang (48), der durch den stromaufwärtigen Träger (36) und den stromabwärtigen Träger (38) begrenzt wird; wobei der stromabwärtige Träger (38) eine Außenfläche (70) mit einem Rotationsprofil (71) aufweist, das einen stromaufwärtigen Abschnitt (72), der den ringförmigen Durchgang (48) begrenzt, und einen stromabwärtigen Abschnitt (76) umfasst;
**dadurch gekennzeichnet, dass**
das Rotationsprofil (71) außerdem einen Verbindungsbogen (74) umfasst, der den stromaufwärtigen Abschnitt (72) mit dem stromabwärtigen Abschnitt (76) verbindet, und dass das Verfahren einen Kompressor-Betriebsschritt umfasst, während dessen ein Hilfsstrom (49) den ringförmigen Durchgang (48) durchquert, wobei er in Bezug auf den stromabwärtigen Abschnitt (76) um einen Einspritzwinkel kleiner oder gleich 10° oder 5° geneigt ist; wobei die Baugruppe mit einem der Ansprüche 1 bis 8 übereinstimmt.

12. Verfahren nach Anspruch 11, **dadurch gekennzeichnet, dass** während des Kompressor-Betriebsschrittes die Hilfsströmung (49) mit einer Grenzschicht (50) in Kontakt mit der äußeren Oberfläche (70) zusammentrifft; wobei die Hilfsströmung (49) und die Grenzschicht (50) in Bezug zueinander um höchstens 30° oder 15° geneigt sind.

13. Verfahren nach einem der Ansprüche 11 bis 12, **dadurch gekennzeichnet, dass** sich während des Kompressor-Betriebsschrittes die Hilfsströmung (49) mit einer ringförmigen Strömung (18) vereinigt, die axial durch den Kompressor strömt; wobei die Hilfsströmung (49) und die ringförmige Strömung (18) relativ zueinander um höchstens um 20° oder 10° geneigt sind.

14. Verfahren nach einem der Ansprüche 11 bis 13, **dadurch gekennzeichnet, dass** der Kompressor einen Rotor (12) aufweist, der die stromaufwärtige ringförmige Schaufelanordnung (28) oder die stromabwärtige ringförmige Schaufelanordnung (30) trägt, wobei sich der Rotor (12) während des Kompressor-Betriebsschritts mit einer Geschwindigkeit von mindestens 15.000 U/min oder 18.000 U/min dreht.

15. Verfahren nach einem der Ansprüche 11 bis 14, **dadurch gekennzeichnet, dass** während des Kompressor-Betriebsschrittes der Hilfsstrom (49) das stromabwärtige Medium (38) kühlt.

## Claims

1. Assembly for a turbomachine (2), in particular for a compressor (4; 6) of a turbomachine (2), the assembly comprising:
- an annular row of upstream blades (28) with trailing edges (42) extending radially from an upstream support (36);
- an annular row of downstream blades (30) with leading edges (40) axially opposite the trailing edges (42) and extending radially from a downstream support (38);
- an annular passage (48) delimited by the upstream support (36) and the downstream support (38);
the downstream support (38) comprising an external surface (70) with a profile of revolution (71) comprising an upstream segment (72) delimiting the annular passage (48) and a downstream segment (76);
the profile of revolution (71) further comprises a junction arc (74) connecting the upstream segment (72) to the downstream segment (76), at least one leading edge (40) being disposed upstream of the junction arc (74);
one of the rows of blades being rotor-like about an axis of rotation (14), **characterised in that** the profile of the annular passage (48) has a central axis (80) forming an angle (α) with the axis of rotation (14) of between 15° and 45°.

2. Assembly according to claim 1, **characterised in that** at least one radially inner end (78) of the leading edge (40) is disposed upstream of the joint arc (74).

3. Assembly according to any one of claims 1 to 2, **characterised in that** each downstream blade (30) has a chord (75) and an axial shrinkage G between the junction arc (74) and its leading edge (40), said axial shrinkage G being less than or equal to 10% of the chord (75), preferably less than or equal to 25% of the chord.

4. Assembly according to any one of claims 1 to 3, **characterised in that** the upstream support (36) has an outer surface tangential to the downstream segment (76).

5. Assembly according to any one of claims 1 to 4, **characterised in that** the upstream support (36) has a conical inner surface (68) delimiting the annular passage (48).

6. Assembly according to any one of claims 1 to 5, **characterised in that** the upstream support (36) and the downstream support (38) comprise an axially abradable sealing device at the annular passage (48).

7. Assembly according to any one of claims 1 to 6, **characterised in that** the upstream support (36) has an annular groove (52) open axially downstream, the upstream segment (72) being at least partially housed in said annular groove (52).

8. Assembly according to any one of claims 1 to 7, **characterised in that** the length E of the passage (48) is greater than or equal to the height C of the passage (48).

9. Turbomachine (2), in particular an aircraft turbojet engine, the turbomachine (2) comprising an assembly, **characterised in that** the assembly complies with any one of claims 1 to 8, preferably the assembly comprises a drum or a disc further supporting a third annular row of blades disposed upstream of the upstream blades (28).

10. Turbomachine (2) according to claim 9, **characterised in that** it comprises an air sampling port communicating with its external environment, said port being disposed upstream of the annular passage (48) and/or communicating with said annular passage (48) in order to cool the drum or disc.

11. Method of controlling the stability of a compressor (4; 6) of a turbomachine, the compressor including an assembly with an annular row of upstream blades (28) with trailing edges (42) extending radially from an upstream support (36); an annular row of downstream blades (30) with leading edges (40) axially opposite the trailing edges (42) and extending radially from a downstream support (38); an annular passage (48) delimited by the upstream support (36) and the downstream support (38); the downstream support (38) comprising an outer surface (70) with a profile of revolution (71) comprising an upstream segment (72) delimiting the annular passage (48) and a downstream segment (76);
**characterised in that**
the profile of revolution (71) further comprises a junction arc (74) connecting the upstream segment (72) to the downstream segment (76), and **in that** the method comprises a compressor operating step during which an auxiliary flow (49) passes through the annular passage (48) while being inclined relative to the downstream segment (76) by an injection angle less than or equal to: 10° or 5°; the assembly being in conformity with any one of claims 1 to 8.

12. Method according to claim 11, **characterised in that** during the compressor operating step, the auxiliary flow (49) joins a boundary layer (50) in contact with the outer surface (70); the auxiliary flow (49) and the boundary layer (50) being inclined relative to each other by at most: 30° or 15°.

13. Method according to any one of claims 11 to 12, **characterised in that** during the compressor operating step, the auxiliary flow (49) joins an annular flow (18) passing axially through the compressor; the auxiliary flow (49) and the annular flow (18) being inclined relative to each other by at most: 20° or 10°.

14. Method according to any one of claims 11 to 13, **characterised in that** the compressor comprises a rotor (12) supporting the upstream annular row of blades (28) or the downstream annular row of blades (30), wherein, during the compressor operating step the rotor (12) rotates at a speed of at least: 15,000 rpm, or 18,000 rpm.

15. Method according to any one of claims 11 to 14, **characterised in that** during the compressor operating step, the auxiliary flow (49) cools the downstream support (38).
